# EUROPEAN PATENT APPLICATION

(11) **EP 2 815 804 A1**
(43) Date of publication of application: **24.12.2014**
(21) Application number: 14171143.2
(22) Date of filing: 04.06.2014
(51) Int. Cl.: B01D 61/14, B01D 67/00, B01D 71/36, B01D 71/56

(54) **Membrane and method for treating fluids including an organic phase**

(30) Priority: 21.06.2013 US 201313923932
(71) Applicant: Pall Corporation, Port Washington, NY 11050 (US)
(72) Inventor: BRANTLEY, John D., Freeville, NY New York 13068 (US); DIETZ, Jacob M., Homer, NY New York 13077 (US)
(74) Representative: Hoeger, Stellrecht & Partner Patentanwälte

(57) **Abstract**

Coated membranes for separating a discontinuous organic phase from a fluid mixture comprising the discontinuous organic phase and a continuous aqueous phase, devices including the membranes, and methods of using the membranes, are disclosed.

## Description

### BACKGROUND OF THE INVENTION

Oil can be removed from a mixture containing oil and water, or from a mixture containing oil, water, and solids. For example, in the alternative fuels market, some companies use a three phase separator to separate the oil phase from the water phase and solids phase. Other separation methods include, for example, using one or more centrifuges.

However, conventional separation methods have been inefficient and/or expensive.

The present invention provides for ameliorating at least some of the disadvantages of the prior art. These and other advantages of the present invention will be apparent from the description as set forth below.

### BRIEF SUMMARY OF THE INVENTION

In accordance with an embodiment of the present invention, a porous membrane for treating fluids including an organic phase is provided, the membrane comprising a first porous surface; a second porous surface; and a porous bulk between the first porous surface and the second porous surface; wherein at least the first porous surface further comprises a particle coating, the particles in the coating having a Critical Wetting Surface Tension (CWST) of about 25 dynes/cm (about 2.5 x 10⁻² N/m) or less, typically, a CWST in the range of from about 22 dynes/cm to about 16 dynes/cm (about 2.2 x 10⁻² N/m to about 1.6 x 10⁻² N/m). Preferably, the particles in the coating comprise PTFE particles.

Typically, the porous membrane under the coating has a CWST in the range from about 23 dynes/cm to about 78 dynes/cm (about 2.3 x 10⁻² N/m to about 7.8 x 10⁻² N/m).

A method for removing an organic phase from a fluid mixture is provided according to another embodiment of the invention, the method comprising contacting an embodiment of the coated membrane with a fluid comprising a mixture of a discontinuous organic phase and a continuous aqueous phase, and passing the organic phase through the membrane. Preferably, the method includes passing the mixture tangentially to the first surface of the membrane (wherein the first surface comprises the particle coating), such that the aqueous phase passes parallel to the first surface of the membrane, and the organic phase passes through the first and second surfaces of the membrane.

In some embodiments of the method, the mixture also comprises a solids phase, and the method includes passing the mixture tangentially to the first surface of the membrane, such that the aqueous phase and the solids phase pass parallel to the first surface of the membrane, and the organic phase passes through the first and second surfaces of the membrane.

In accordance with embodiments of the method, the organic phase passing through the membrane, depleted of aqueous phase (and depleted of the solids phase if the mixture includes a solids phase), is preferably recovered in suitable condition for further processing, recycling, or disposal.

Filter devices and filter modules comprising the membranes are also provided in accordance with embodiments of the invention.

### BRIEF DESCRIPTION OF THE SEVERAL VIEWS OF THE DRAWING(S)

Figure 1 is a graph showing the throughput of a membrane according to an embodiment of the invention compared to two commercially available membranes.
Figure 2 is a graph showing the throughputs of membranes according to two embodiments of the invention compared to a commercially available membrane.

### DETAILED DESCRIPTION OF THE INVENTION

Advantageously, the membranes according to the invention can be used in separating a low surface energy discontinuous liquid phase, preferably an organic phase (more preferably oil), from a high surface energy continuous liquid phase (preferably, an aqueous phase such as water), e.g., separating oil from a mixture of the oil with water, or separating oil from a mixture of the oil with water and a solids phase.

In accordance with an embodiment of the present invention, a porous membrane for treating fluids including an organic phase is provided comprising a first porous surface; a second porous surface; and a porous bulk between the first porous surface and the second porous surface; wherein at least the first porous surface further comprises a particle coating, the particles in the coating having a CWST of about 25 dynes/cm (about 2.5 x 10⁻² N/m) or less, preferably, in the range of from about 22 dynes/cm to about 16 dynes/cm (about 2.2 x 10⁻² N/m to about 1.6 x 10⁻² N/m). In a more preferred embodiment, the particles comprise PTFE particles.

A method for removing an organic phase from a fluid mixture is provided according to another embodiment of the invention, the method comprising contacting an embodiment of the coated membrane with a fluid comprising a mixture of a discontinuous organic phase and a continuous aqueous phase, and passing the organic phase through the membrane. Preferably, the method includes passing the mixture tangentially to the first surface of the membrane, such that the aqueous phase passes parallel to the first surface of the membrane, and the organic phase passes through the first and second surfaces of the membrane.

In some embodiments of the method, the mixture also comprises a solids phase, and the method includes passing the mixture tangentially to the first surface of the membrane, such that the aqueous phase and the solids phase pass parallel to the first surface of the membrane, and the organic phase passes through the first and second surfaces of the membrane.

In accordance with embodiments of the method, the organic phase passing through the membrane, depleted of aqueous phase (and depleted of the solids phase if the mixture includes a solids phase), is preferably recovered and recycled.

The organic phase may be, for example, in the range of about 5% to about 15% of the total volume of the mixture, though the organic phase can be less than 5% of the mixture, or greater than 15% of the mixture. Typically, the solids phase includes small particles, on the order of about 10 microns in diameter or less. The solids phase may be, for example, in the range of about 10% to about 20% of the total volume of the mixture, though the solids phase can be less than 10% of the mixture, or greater than 20% of the mixture.

Without being limited to any particular mechanism, it is believed that, when used in a cross-flow filtration application (particularly wherein the solids particles are larger than the oil droplets), solids are lifted away, and oil droplets are coalesced into a continuous layer and dragged down to the membrane, leading to improved permeation.

A variety of particles (preferably PTFE particles), typically provided with carrier fluids, for example, in particle fluids and sprays, including commercially available particles in liquids and sprays, are suitable for use in the invention. The particle coating can be deposited on the membrane by a variety of techniques known in the art, for example, spray coating, wherein the particles are suspended in liquid droplets sprayed on the membrane as an aerosol, and dip coating, wherein the particles are suspended in a liquid into which the membrane is dipped. Preferably, the particles are suspended in a volatile carrier liquid for application to a surface of the membrane. Suitable volatile carrier liquids include, for example, 1,1,1,2-tetrafluoroethane and methanol. Illustrative suitable sprays, release agents and lubricating agents including PTFE particles are available from, for example, Miller-Stephenson Chemical Company, Inc., SPRAYON (Cleveland, OH), and Chem-Trend L.P. (Howell, MI).

The particles can have any suitable average diameter, and can be applied in any suitable concentration to the surface of the membrane. Typically, the particles have an average diameter in the range of from about 1 microns to about 6 microns (in some embodiments, an average diameter in the range of from about 3 microns to about 6 microns), through particles having larger or smaller average diameters can be suitable for use in accordance with embodiments of the invention. Typically, when applied by a spray gun, the particles are applied at a rate of at least about 0.2 gm/plate, more typically, applied at a rate of at least 0.8 gm/plate.

The particles have a critical wetting surface tension (CWST, as defined in, for example, U.S. Patent 4,925,572) of about 25 dynes/cm (about 2.5 x 10⁻² N/m) or less, preferably, in the range of from about 22 dynes/cm to about 16 dynes/cm (about 2.2 x 10⁻² N/m about 1.6 x 10⁻² N/m).

The membrane to be coated can have any desired CWST. Typically, the membrane has a CWST in the range from about 23 dynes/cm (about 2.3 x 10⁻² N/m) to about 78 dynes/cm (about 7.8 x 10⁻² N/m), but the CWST can be less than less than or greater than those values. The CWST can be selected as is known in the art, e.g., as additionally disclosed in, for example, U.S. Patents 5,152,905, 5,443,743, 5,472,621, and 6,074,869.

A variety of membranes, preferably, polymeric membranes are suitable for use in the invention, including commercially available membranes. Suitable polymers include, but are not limited to, perfluorinated polyolefins, such as polytetrafluoroethylene (PTFE), polyolefins (e.g., polypropylene and polymethylpentene), polyesters, polyamides (for example, any nylon, e.g., Nylon 6, 11, 46, 66, and 610), polyimides, sulfones (e.g., polysulfones, including aromatic polysulfones such as, for example, polyethersulfone, bisphenol A polysulfone, polyarylsulfone, and polyphenylsulfone), polyvinylidene halides (including polyvinylidene fluoride (PVDF)), acrylics, polyacrylonitriles, polyaramides, polyarylene oxides and sulfides, and polymers and copolymers made from halogenated olefins and unsaturated nitriles.

Other suitable materials include cellulosic derivatives, such as cellulose acetate, cellulose propionate, cellulose acetate-propionate, cellulose acetate-butyrate, and cellulose butyrate.

Suitable commercially available membranes include, but are not limited to, those available from Pall Corporation under the trademarks SUPOR^{®}, VERSAPOR^{®}, and POSIDYNE^{®}, ULTIPOR N₆₆^{®}, ULTIPOR^{®}, FLUORODYNE^{®}, LOPRODYNE^{®}, CARBOXYDYNE^{®}, IMMUNODYNE^{®}, BIODYNE A^{®}, BIODYNE B^{®}, BIODYNE C^{®}, and MUSTANG^{®}.

The pore structure of the membrane depends on, for example, the composition of the fluid to be treated and/or the size of the organic phase droplets. The membrane can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or a removal rating that reduces or allows the passage therethrough of one or more materials of interest as the fluid is passed through the porous membrane. Typically, the membrane has an average pore size in the range of about 0.1 to about 0.8 microns, though the average pore size can be larger or smaller than a size in that range.

In accordance with embodiments of the invention, the membrane can have a variety of configurations, including planar, pleated, and/or hollow cylindrical.

One or more membranes are typically disposed in a housing comprising at least one inlet and at least one outlet and defining at least one fluid flow path between the inlet and the outlet, wherein the membrane is across the fluid flow path, to provide a filter device or filter module. In an embodiment, a filter device is provided comprising a housing comprising an inlet and a first outlet, and defining a first fluid flow path between the inlet and the first outlet; and the membrane, the membrane being disposed in the housing across the first fluid flow path.

Preferably, for crossflow applications, a membrane is disposed in a housing comprising at least one inlet and at least two outlets and defining at least a first fluid flow path between the inlet and the first outlet, and a second fluid flow path between the inlet and the second outlet, wherein the membrane is across the first fluid flow path, to provide a filter device or filter module. In an illustrative embodiment, the filter device comprises a crossflow filter module, the housing comprising an inlet, a first outlet comprising a concentrate outlet, and a second outlet comprising a permeate outlet, and defining a first fluid flow path between the inlet and the first outlet, and a second fluid flow path between the inlet and the second outlet, wherein the membrane is disposed across the first fluid flow path.

The filter device or module may be sterilizable. Any housing of suitable shape and providing an inlet and one or more outlets may be employed.

The housing can be fabricated from any suitable rigid impervious material, including any impervious thermoplastic material, which is compatible with the fluid being processed. For example, the housing can be fabricated from a metal, such as stainless steel, or from a polymer, e.g., transparent or translucent polymer, such as an acrylic, polypropylene, polystyrene, or a polycarbonated resin.

The following examples further illustrate the invention but, of course, should not be construed as in any way limiting its scope.

### EXAMPLE 1

This example demonstrates the preparation of a membrane according to an embodiment of the invention.

A 0.45 micron (µm) ULTIPOR Nylon 6,6 membrane (Pall Corporation, Port Washington, NY) having a CWST of 75-78 dynes/cm is sprayed with polytetrafluoroethylene (PTFE) particles (CWST about 18-20 dynes/cm) suspended in solvent (Miller-Stephenson spray MS-122V; average particle size 6 µm, with a range of 1-20 µm), to provide a particle coating, resulting in the coated upstream surface (the first surface to be contacted by the fluid) of the membrane.

### EXAMPLE 2

This example compares a membrane according to an embodiment of the invention to commercially available membranes, and shows the higher efficiency of the membrane according to an embodiment of the invention compared to commercially available membranes.

Commercially available PTFE (0.45 µm; CWST 25 dynes/cm; EMFLON, Pall Corporation, East Hills, NY) and polyethylene (0.4 µm; CWST 35 dynes/cm; SOLUPOR; Lydall Inc., Manchester, CT) membranes are obtained, and placed in housings, as is a membrane produced as in Example 1, wherein the coated surface of the membrane produced as in Example 1 is the upstream surface of the membrane in the housing.

The test fluid is 90% water (representing a continuous aqueous phase) and 10% hexadecane (representing a dispersed organic phase). The membranes are flat sheets solvent-bonded to stainless steel supports within a crossflow stainless steel housing. The effective membrane area in the housing is 0.0128M². Based on the amount of hexadecane in the initial feed of test fluid, the maximum throughput that can be reached in these experiments is 253 L/M².

Only hexadecane passes through the membranes.

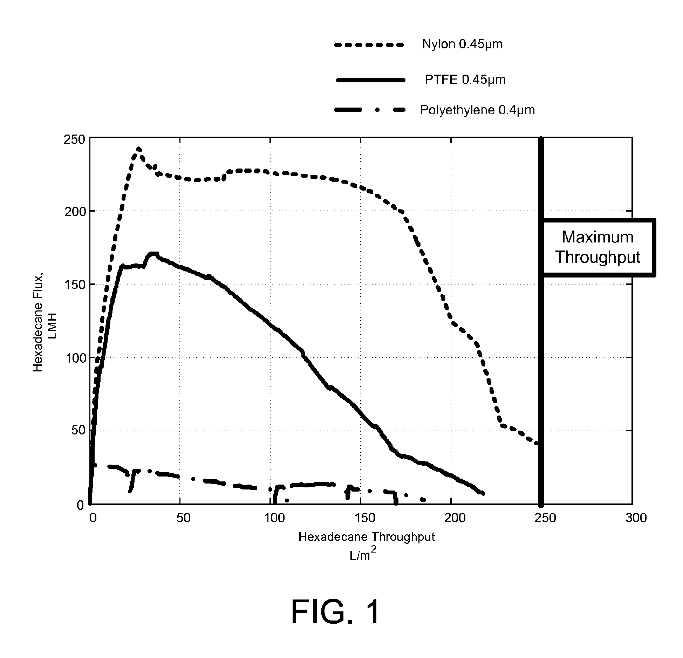

As shown in Figure 1, a graph of the hexadecane throughput in L/M² (X-axis) and the hexadecane flux in liters per meter square per hour (LMH; lm⁻²h⁻¹) (Y-axis) shows that the flux reaches 225 LMH with a total throughput of almost 250 L/M² for the membrane according to an embodiment of the invention, whereas the commercially available PTFE membrane shows a flux reaching about 175 LMH with a total throughput of 225 L/M², and the commercially available polyethylene membrane shows a flux reaching about 25 LMH with a total throughput of 175 L/M². The graph also shows that for each membrane, the flux decreases, probably because the hexadecane (oil) concentration in the feed decreases as hexadecane (oil) passes through the membrane.

### EXAMPLE 3

This example compares membranes according to two embodiments of the invention to a commercially available membrane, and shows the higher efficiency of the membranes according to embodiments of the invention compared to commercially available membranes.

Commercially available PTFE (0.45 µm; CWST 25 dynes/com; EMFLON, Pall Corporation, East Hills, NY) membranes are obtained.

One commercially available PTFE membrane, as well as a 0.45 µm ULTIPOR Nylon 6,6 membrane (Pall Corporation, Port Washington, NY) are sprayed with PTFE particles suspended in solvent (Miller-Stephenson spray MS-122XD; average particle size 3.7 µm, with a range of 1-15 µm). These particle coated membranes are compared with the commercially available PTFE membrane.

The membranes are placed in housings, and tested, and the results are graphed, as described in Example 2, using the same test fluid and conditions in that example.

Only hexadecane passes through the membranes.

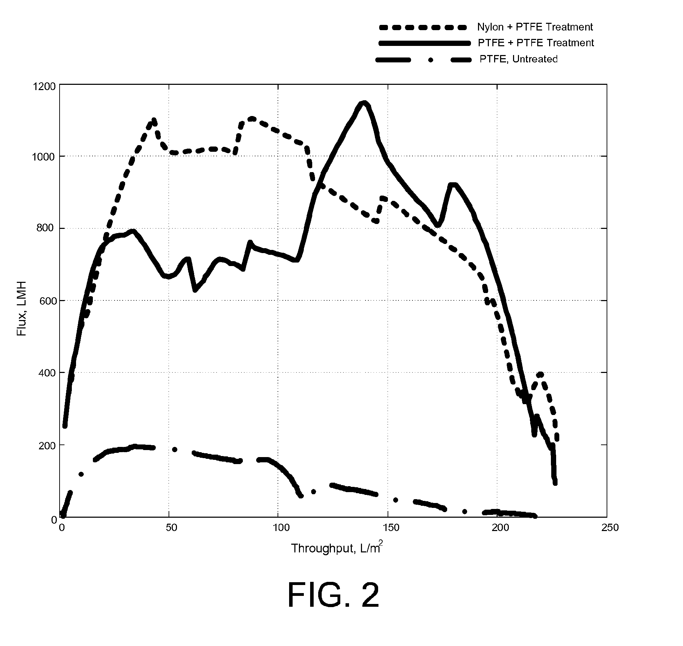

As shown in Figure 2, a graph of the hexadecane throughput in L/M² (X-axis) and the hexadecane flux in LMH (Y-axis) shows fluxes reaching about 800 to about 1000 LMH with total throughputs of about 225 L/M² for the membranes according to embodiments of the invention, whereas the commercially available PTFE membrane shows a flux reaching about 200 LMH with a total throughput of 220 L/M². The graph also shows that for each membrane, the flux decreases since the hexadecane (oil) concentration in the feed decreases as hexadecane (oil) passes through the membrane.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A porous membrane comprising
(a) a first porous surface;
(b) a second porous surface;
(c) a porous bulk between the first porous surface and the second porous
surface,
wherein at least the first surface comprises a particle coating, the particles in the coating having a Critical Wetting Surface Tension (CWST) of about 25 dynes/cm (about 2.5 x 10⁻² N/m) or less.

2. The membrane of claim 1, wherein the particles comprise PTFE particles.

3. The membrane of claim 1 or 2, wherein the particles have a CWST in the range of from about 25 dynes/cm (about 2.5 x 10⁻² N/m) to about 16 dynes/cm (about 1.6 x 10⁻² N/m).

4. The membrane of any one of claims 1-3, wherein the membrane under the coating has a CWST in the range of from about 23 (about 2.3 x 10⁻² N/m) to about 78 dynes/cm (about 7.8 x 10⁻² N/m).

5. A method for removing an organic phase from a fluid mixture, the method comprising: passing a fluid comprising a mixture of a discontinuous organic phase and a continuous aqueous phase tangentially to the first surface of the membrane of any one of claims 1-4, and passing the aqueous phase parallel to the first surface of the membrane while passing the organic phase through the first and second surfaces of the membrane.

6. The method of claim 5, wherein the mixture further comprises a solids phase, and the method comprises passing the aqueous phase and the solids phase parallel to the first surface of the membrane while passing the organic phase through the first and second surfaces of the membrane.

7. A crossflow filter module comprising
(a) a housing comprising an inlet, a first outlet comprising a concentrate outlet, and a second outlet comprising a permeate outlet, and defining a first fluid flow path between the inlet and the first outlet; and defining a second fluid flow path between the inlet and the second outlet;
and,
(b) the membrane of any one of claims 1-4, disposed in the housing across the first fluid flow path.
